# NEUE EUROPÄISCHE PATENTSCHRIFT

(11) **EP 1 522 522 B2**
(45) Veröffentlichungstag und Bekanntmachung des Hinweises auf die Entscheidung über den Einspruch: **07.03.2012**
(45) Hinweis auf die Patenterteilung: 15.08.2007
(21) Anmeldenummer: 03022600.5
(22) Anmeldetag: 06.10.2003
(51) Int. Cl.: C01B 17/90, C01G 49/14

(54) **Verfahren zur Aufarbeitung eisenbelasteter Gebrauchtschwefelsäure**
Method for the processing of iron-contaminated waste sulphuric acid
Procédé pour traiter d'acide sulfurique usé contenant du fer

(43) Veröffentlichungstag der Anmeldung: 13.04.2005
(73) Patentinhaber: Kerr-McGee Pigments GmbH, 47829 Krefeld (DE)
(72) Erfinder: Auer, Gerhard, 47800 Krefeld (DE); Köhler, Berndt-Ullrich, 47809 Krefeld (DE); Laubach, Benno, 47809 Krefeld (US)
(74) Vertreter: HOFFMANN EITLE

(56) Entgegenhaltungen:
- US-A- 4 382 916
- US-A- 4 952 378
- PATENT ABSTRACTS OF JAPAN vol. 2000, no. 02, 29. Februar 2000 (2000-02-29) & JP 11 322343 A (TOSHIN KAGAKU KOGYO KK), 24. November 1999 (1999-11-24)
- PATENT ABSTRACTS OF JAPAN vol. 017, no. 285 (C-1066), 2. Juni 1993 (1993-06-02) & JP 05 017160 A (ASAKA RIKEN KOUGIYOU KK), 26. Januar 1993 (1993-01-26)

## Beschreibung

Die Erfindung betrifft ein Verfahren zur Aufarbeitung schwermetallbelasteter Gebrauchtschwefelsäure.

Bei der Herstellung von Titandioxid nach dem Sulfatverfahren fallen schwermetallbelastete Gebrauchtschwefelsäuren an. So enthält die nach Abfiltrieren des Titanoxidhydrates verbleibende Dünnsäure Schwermetalle wie Eisen, die die Verwertung oder Entsorgung erschweren.

Es hat daher nicht an Versuchen gefehlt, die Dünnsäure in ökologisch unbedenklicher Weise weiter zu verarbeiten bzw. zu entsorgen. So beschreibt EP 132820 die Möglichkeit, die Dünnsäure einzudampfen, gegebenenfalls Metallsulfate auszuschleusen und die restlichen Metallsulfate mit CaO, Ca(OH)2 und/oder CaC03 zu Gips und schwerlöslichen Metallverbindungen umzusetzen. Dieses Verfahren ist jedoch insbesondere wegen der zur Aufkonzentrierung der Dünnsäure erforderlichen Energie wenig wirtschaftlich. Entsprechend ist auch die Aufarbeitung anderer Gebrauchtschwefelsäuren, die schwermetallbelastet sind, in der Regel aufwendig und unwirtschaftlich.

Vor diesem Hintergrund ist es die der Erfindung zugrundeliegende Aufgabe, ein unter Umwelt- und Kostengesichtspunkten verbessertes Verfahren zur Entsorgung bzw. Verwertung von eisenbelasteter Gebrauchtschwefelsäure bereitzustellen.

Diese Aufgabe wird erfindungsgemäß gelöst durch ein Verfahren, bei dem die eisenbelastete Gebrauchtschwefelsäure oder daraus erhaltene eisenhaltige Aufarbeitungsprodukte mit einem Material umgesetzt wird, das Eisen- und gegebenenfalls andere Metallchloride enthält, wobei Eisen(II)sulfat erhalten wird. Bevorzugt wird dabei zusätzlich HCl erhalten, was in gasförmiger Form und/oder als wäßrige Salzsäure abgetrennt und wiederverwertet werden kann.

Die Konzentration der Gebrauchtschwefelsäure ist nicht besonders beschränkt und beträgt in der Regel 10 bis 90 %. So kann Dünnsäure mit einer H₂SO₄-Konzention von 20 bis 30 % direkt verwendet werden. Oder es können dünnsäurehaltige Waschsäuren oder Prozesssäuren mit geringerer H₂SO₄-Konzentration verwendet werden. Die Säure kann jedoch vor der Umsetzung aufkonzentriert werden, z.B. auf eine Konzentration von 50 bis 70 % oder gar 70 bis 90 %. Die Gebrauchtschwefelsäure kann neben Eisenionen weitere Metallionen wie z.B Mangan und Titan enthalten. Der Gehalt an Eisenionen beträgt 2 bis 22 Gew.-%.

Es ist auch möglich, aus Gebrauchtschwefelsäure erhaltene Produkte zu verwenden, z.B.:
- aufkonzentrierte Gebrauchtschwefelsäure mit suspendiertem kristallinem Eisensulfat
- eisensulfathaltige Feststoffe (z.B. Filterkuchen, wie er bei Abtrennung von eisensulfathaltigen Metallsulfaten aus schwefelsauren Lösungen anfällt) mit gegebenenfalls anhaftender Schwefelsäure (Filtersalze)

Diese aus Gebrauchtschwefelsäure erhaltenen Produkte können auch in beliebiger Kombination mit eisensulfathaltiger Gebrauchtschwefelsäure verwendet werden.

Die erfindungsgemäß verwendete Gebrauchtschwefelsäure bzw. das daraus erhaltene Material stammt vorzugsweise aus der Titandioxid-Herstellung nach dem Sulfatverfahren, aus der Kupferverhüttung, Bleiverhüttung, oder Zinkverhüttung, oder sie fällt als ein Nebenprodukt einer organischen Synthese an oder ist eine Beizereilösung resultierend vom Beizen von Stahl mit Schwefelsäure).

Das Material, das mit der Gebrauchtschwefelsäure umgesetzt wird, kann neben Eisenchlorid andere Metallchloride wie z.B Chrom, Vanadium, Niob und Zirconium enthalten. Das Material kann als Feststoff, als Suspension oder als salzsaure Lösung vorliegen, vorzugsweise als salzsaure Lösung. Das Material enthält vorzugsweise Eisenchlorid in einer Menge von 10 bis 30 Gew.-%. Bei Vorliegen von Feststoffen, Aufschlämmungen oder Suspensionen kann das Eisenchlorid jedoch auch in einer Menge von 30 bis 60 Gew.% vorliegen. Entsprechende Materialien fallen z.B. bei der Aufarbeitung von Beizlösungen oder als Rückstände bei der Titandioxidherstellung nach dem Chloridverfahren an. Das Material stammt in der Regel nicht aus dem gleichen Verfahren wie die Gebrauchtschwefelsäure.

Salzsaure Beizlösungen, wie sie z.B. beim Beizen von Stahl anfallen, enthalten in der Regel 14 bis 25 % Eisen(II)chlorid, 3 bis 7% HCl und verschiedene Verunreinigungen, die von dem gebeizten Stahl abhängen. Es sind verschiedene Verfahren bekannt, bei denen diese Beizlösungen bzw. deren Aufarbeitungsprodukte mit Schwefelsäure umgesetzt werden, um Eisensulfat zu gewinnen und die Beizlösung zu rezyklieren. So beschreibt US 4,222,997 ein Verfahren, bei dem die Beizlösung zunächst aufkonzentriert wird und anschließend mit konzentrierter (95 bis 98 %) Schwefelsäure umgesetzt wird. Gemäß US 4,382,916 wird die Beizlösung so weit aufkonzentriert, bis Eisen(II)chlorid ausfällt, das anschließend mit Schwefelsäure zu Eisen(II)sulfat-Monohydrat umgesetzt wird. DE 41 22 920 A1 sowie WO 01/49901 A1 beschreiben Verfahren, bei denen Beizlösung mit Schwefelsäure zu Eisen(II)sulfat-Heptahydrat umgesetzt wird. Die in diesen Schriften beschriebenen Reaktionsbedingungen für die Umsetzung von Schwefelsäure mit Beizlösung können auch erfindungsgemäß bei der Verwendung von Gebrauchtschwefelsäure aus der Titandioxidherstellung Anwendung finden. Da diese Verfahren jedoch in der Regel mit reiner konzentrierter Schwefelsäure mit einer Konzentration von über 90 % durchgeführt werden, während erfindungsgemäß die Gebrauchtschwefelsäure eine Konzentration in der Regel unter 90 % und häufig nur 20 bis 30 % aufweist sowie Eisenund andere Metallionen enthält, wird die Konzentration des eisenchloridhaltigen Materials entsprechend angepasst. So wird bei der Verwendung von Dünnsäure die Umsetzung mit einem festen eisenchloridhaltigen Material oder von eisenchloridhaltigen Suspensionen oder von hochkonzentrierten eisenchloridhaltigen Lösungen bevorzugt, während aufkonzentrierte Dünnsäuren oder Filtersalze bevorzugt mit niedrig konzentrierten FeCl₂-Lösungen umgesetzt werden.

Aus der Beizlösung können zunächst Eisen(II)chlorid und andere Metallchloride durch Aufkonzentrieren der Beizlösung als Feststoff abgetrennt werden. Der Feststoff wird dann in der Gebrauchtschwefelsäure bei erhöhter Temperatur gelöst, und anschließend wird Eisen(II)sulfat durch Absenken der Temperatur ausgefällt. Alternativ kann die Beizlösung direkt mit der Gebrauchtschwefelsäure umgesetzt werden. Durch Absenken der Temperatur wird dann Eisen(II)sulfat ausgefällt. Durch geeignete Wahl der Parameter kann erreicht werden, dass das Eisensulfat im Wesentlichen als Eisensulfat-Heptahydrat auskristallisiert. Die Reaktionsbedingungen können aber auch so gestaltet werden, dass überwiegend Eisensulfat-Monohydrat auskristallisiert. Die Wahl der Parameter hängt naturgemäß von den Anforderungen an das Eisensulfat hinsichtlich dessen weiterer Verwendung ab. Hohe Temperaturen bei der Reaktion und hohe Schwefelsäurekonzentrationen begünstigen die Kristallisation von Eisensulfat-Monohydrat, niedrige Temperaturen bei der Reaktion und niedrige Schwefelsäurekonzentrationen begünstigen die Kristallisation von Eisensulfat-Heptahydrat.

Das Auskristallisieren von Eisensulfat-Heptahydrat ist in der Regel bevorzugt, da durch die hohe Kristallwassermenge eine Aufkonzentrierung der Lösung nur in geringerem Umfang notwendig werden oder diese Aufkonzentrierung gar ganz unterbleiben kann.

Bei entsprechender Kontrolle der Temperatur in dem Reaktor auf maximal 50 °C, vorzugsweise 30 bis 45 °C, fällt das Eisen(II)sulfat als Heptahydrat aus, was besonders bevorzugt ist. Es können Parameter gewählt werden, dass die anderen Metallsulfate, die sowohl von der Gebrauchtschwefelsäure wie auch von der Beizlösung herrühren, unter den Reaktionsbedingungen ihr Löslichkeitsprodukt nicht erreichen und in Lösung bleiben (so wird erreicht, dass das Eisen(II)sulfat in hoher Reinheit erhalten wird); oder die Parameter können so gewählt werden, dass die anderen Metallsulfate im wesentlichen zusammen mit dem Eisensulfat auskristallisieren. Die Wahl der Parameter hängt naturgemäß von den Reinheitsanforderungen an das Eisensulfat hinsichtlich dessen weiterer Verwendung ab.

Sofern ein Überstand, der die anderen Metalle enthält, erhalten wird, kann dieser in bekannter Weise entsorgt werden. Z.B. können die Metalle als Hydroxide ausgefällt und anschließend getrocknet werden. Vorzugsweise wird hierbei der pH-Wert stufenweise erhöht, um eine selektive Ausfällung zu ermöglichen.

Diese Herstellung von Eisen(II)sulfat aus Gebrauchtschwefelsäure und Beizlösung ist gegenüber der Herstellung von Eisen(II)sulfat aus reiner Schwefelsäure besonders wirtschaftlich, da (i) die Gebrauchtschwefelsäure wirtschaftlich günstiger ist, (ii) ihre Verwendung trotz des Vorliegens von Schwermetallen keine zusätzlichen Kosten verursacht, da eine weitere Aufarbeitung auch bei Verwendung reiner Schwefelsäure aufgrund der Verunreinigungen in der Beizlösung notwendig ist, und (iii) ihre Verwendung aufgrund ihres Eisengehaltes die Produktion an Eisen(II)sulfat steigert und das Auskristallisieren von Eisensulfat durch die höhere Konzentration begünstigt. Bei der Behandlung von Beizlösungen kann somit die Gebrauchtschwefelsäure die reine Schwefelsäure im wesentlichen ohne Qualitätsverlust ersetzen und weist darüber hinaus zusätzliche Vorteile auf, wenn eine Verwertung des Eisensulfats angestrebt wird. Hierdurch ist nicht nur eine wirtschaftliche, sondern auch ökologisch verträgliche Verwertung der eisenhaltigen Gebrauchtschwefelsäure, wie sie z.B. aus der Titanoxidherstellung nach dem Sulfatverfahren erhalten wird, oder einer schwefelsauren Beizereilösung gewährleistet. Darüber hinaus ist möglich, das Eisenchlorid-haltige Material und/oder das Eisensulfat-haltige Material vor oder nach der Umsetzung mit dem jeweils anderen Material durch Zugabe von metallischem Eisen oder Eisenoxiden oder einer Mischung aus beiden in der Acidität zu reduzieren und gleichzeitig die Konzentration an Eisen zu erhöhen.

Bei der Wahl der geeigneten Konzentration für eine möglichst effiziente Umsetzung des Eisenchlorid-haltigen Materials mit dem Eisensulfat-haltigen Material und eine möglichst effiziente Kristallisation und Abtrennung des Eisensulfats besteht eine große Anzahl an Freiheitsgraden: So kann z.B. bei Verwendung einer niedrigkonzentrierten eisenhaltigen Schwefelsäure (z.B. Dünnsäure aus der Titandioxidproduktion) die Umsetzung mit festen Metallchloriden oder einer hochkonzentrierten Suspension von Metallchloriden in wässriger Lösung besonders vorteilhaft sein. Umgekehrt kann bei Verwendung einer hochkonzentrierten eisenhaltigen Schwefelsäure (z.B. einer aufkonzentrierten Dünnsäure aus der Titandioxidproduktion oder von Metallsulfaten, wie sie bei der Aufkonzentrierung der Dünnsäure aus der Titandioxidproduktion anfallen und welche noch anhaftende Schwefelsäure enthalten können oder von kristallinen eisenhaltigen Metallsulfaten, welche in Schwefelsäure suspendiert sind) die Umsetzung mit einer niedrigkonzentrierten Lösung von Metallchloriden besonders vorteilhaft sein. Diese Freiheitsgrade können - neben Temperatur und Druck - auch dafür genutzt werden, um gezielt Eisensulfat-Monohydrat oder Eisensulfat-Heptahydrat auszukristallisieren.

Ein weiteres Material, das für die Umsetzung mit der Gebrauchtschwefelsäure verwendet werden kann, sind die Metallchloridrückstände, die bei der Titandioxidherstellung nach dem Chloridverfahren anfallen. Die Aufarbeitung dieser Rückstände ist insbesondere wegen ihres Schwermetallgehaltes aufwendig und wird u.a. in EP 390 293 A1 und DE 42 43 559 A1 beschrieben. Nach Abtrennen aus dem Titantetrachloridstrom - in der Regel durch einen dem Wirbelbettreaktor nachgeschalteten Zyklon - wird ein Feststoffgemisch erhalten aus nicht abreagiertem Titandioxid, Siliciumdioxid, Koks, Eisen(II)chlorid sowie anderen Chloriden, das auch als Zyklonstaub bezeichnet wird. Durch Auflösen des Zyklonstaubs in verdünnter Salzsäure und Abtrennen der wasserunlöslichen Bestandteile bzw. durch Auslaugen mit Salzsäure wird eine Lösung erhalten, die überwiegend Eisen(II)chlorid, daneben aber auch Aluminiumchlorid, Manganchlorid, Magnesiumchlorid, Zirkoniumchlorid und Spurenelemente von Chrom, Niob und Vanadium als Chloride enthält. Der Eisenionen-Gehalt beträgt vorzugsweise 10 bis 30 Gew.-%.

Dieses Eisen(II)chlorid-haltige Material wird dann - gegebenenfalls nach Abtrennung der unlöslichen Bestandteile - mit der Gebrauchtschwefelsäure, wie z.B. einer Gebrauchtschwefelsäure aus der Titandioxidherstellung nach dem Sulfatverfahren, umgesetzt, wobei die Temperaturführung derart gewählt wird, dass Eisen(II)sulfat ausfällt. Bei entsprechender Kontrolle der Temperatur in dem Reaktor auf maximal 50 °C, vorzugsweise 30 bis 45 °C, fällt das Eisen(II)sulfat als Heptahydrat aus, was besonders bevorzugt ist. Da die anderen Metallsulfate, die sowohl von der Gebrauchtschwefelsäure wie auch von der Metallchloridabfalllösung herrühren, unter den Reaktionsbedingungen ihr Löslichkeitsprodukt i.a. nicht erreichen, bleiben sie in Lösung. So wird erzielt, dass das Eisen(II)sulfat in guter Reinheit erhalten wird.

Der Überstand, der die anderen Metalle enthält, kann in bekannter Weise entsorgt werden. Z.B. können die Metalle als Hydroxide ausgefällt und anschließend getrocknet werden. Vorzugsweise wird hierbei der pH-Wert stufenweise erhöht, um eine selektive Ausfällung zu ermöglichen.
Besonders bevorzugt ist eine Umsetzung mit Ca-Verbindungen, wobei im Gegensatz zur Neutralisation von Metallchloriden mit Ca-Verbindungen nur wenig wasserlösliche Anteile verbleiben.

Diese Herstellung von Eisen(II)sulfat aus Gebrauchtschwefelsäure und Metallchloridabfalllösung stellt eine besonders wirtschaftliche Verwertung dieser Abfallprodukte dar, insbesondere in Titandioxidanlagen, bei denen Titandioxid sowohl nach dem Sulfatverfahren wie auch dem Chloridverfahren hergestellt wird, oder in Beizereianlagen, in denen sowohl mit Schwefelsäure wie auch mit Salzsäure gebeizt wird, und somit die beiden Abfallprodukte jeweils in einer Fabrik anfallen.
Die besondere Tragweite der erfindungsgemäßen Lösung ergibt sich insbesondere daraus, dass für beide Abfallprodukte, nämlich sowohl für die eisenhaltige Gebrauchtschwefelsäure als auch für die eisenhaltigen Metallchloridrückstände, bisher jeweils zahlreiche technisch aufwendige und kostspielige oder aber ökologisch fragwürdige Entsorgungsverfahren großtechnisch praktiziert werden, welche bei Anwendung des erfindungsgemäßen Verfahrens obsolet werden.

### Beispiel 1:

100 ml (= 133,4 g) einer FeC12-Lösung mit der Zusammensetzung

| | |
|---|---|
| FeCl2 | = 250 g/l |
| Mn | = 26 g/l |
| Nb | = 8,1 g/l |
| Al | = 7,7 g/l |
| Mg | = 5,9 g/l |
| V | = 4,3 g/l |
| Ti | = 2,3 g/l |
| Cr | = 2,1 g/l |
| HCl | = 24 g/l |

wurden mit 112,8 g,eines Sulfatschlamms (enthaltend etwa 120% der stöchiometrisch erforderlichen Menge an Schwefelsäure) versetzt, wie er bei der Aufkonzentrierung von Dünnsäure aus der Titandioxidherstellung nach dem Sulfatverfahren anfällt. Der Sulfatschlamm besteht aus in Schwefelsäure suspendierten kristallinen Metallsulfaten; sein Eisengehalt beträgt typischerweise etwa 4 bis 10 Gew.-% (als Fe).
Nach anschließender destillativer Abtrennung der entstandenen Salzsäure bei 103 bis 107°C wurde etwa 118,6 g eines überwiegend aus Eisensulfat bestehenden Rückstands erhalten, der noch etwa 0,1 Gew.-% an Chlorid enthielt.

### Beispiel 2:

100 ml (= 133,4 g) einer FeCl2-Lösung mit der Zusammensetzung

| | |
|---|---|
| FeCl2 | = 250 g/l |
| Mn | = 26 g/l |
| Nb | = 8,1 g/l |
| Al | = 7,7 g/l |
| Mg | = 5,9 g/l |
| V | = 4,3 g/l |
| Ti | = 2,3 g/l |
| Cr | = 2,1 g/l |
| HCl | = 24 g/l |

wurden mit 96 g eines Sulfatschlamms (mit in etwa der stöchiometrisch erforderlichen Menge an Schwefelsäure) versetzt, wie er bei der Aufkonzentrierung von Dünnsäure aus der Titandioxidherstellung nach dem Sulfatverfahren anfällt. Der Sulfatschlamm besteht aus in Schwefelsäure suspendierten kristallinen Metallsulfaten; sein Eisengehalt beträgt typischerweise etwa 4 bis 10 Gew.-% (als Fe).
Nach anschließender destillativer Abtrennung der entstandenen Salzsäure bei 103 bis 107°C wurde etwa 104,7 g eines überwiegend aus Eisensulfat bestehenden Rückstands erhalten, der noch etwa 0,3 Gew.-% an Chlorid enthielt.

### Beispiel 3:

88,4 g einer Mischung aus Metallchloriden mit unlöslichen Rückständen aus der Titandioxidherstellung nach dem Chloridverfahren mit der Zusammensetzung

| | |
|---|---|
| FeCl2 * 4 H2O | = 43,6 g |
| FeCl3 | = 3,9 g |
| MnCl2 * 4 H2O | = 8,3 g |
| AlCl3 * 6 H2O | = 9,2 g |
| MgCl2 * 6 H2O | = 5,1 g |
| TiCl4 | = 4,7 g |
| Titanschlacke | = 7,2 g |
| Petrolkoks | = 6,3 g |

wurden mit 102,9 g eines Sulfatschlamms (mit in etwa der stöchiometrisch erforderlichen Menge an Schwefelsäure) versetzt, wie er bei der Aufkonzentrierung von Dünnsäure aus der Titandioxidherstellung nach dem Sulfatverfahren anfällt. Der Sulfatschlamm besteht aus in Schwefelsäure suspendierten kristallinen Metallsulfaten; sein Eisengehalt beträgt typischerweise etwa 4 bis 10 Gew.-% (als Fe).
Nach anschließender destillativer Abtrennung der entstandenen Salzsäure bei 103 bis 107°C (80 min bei einer Ölbadtemperatur von 180°C) wurde etwa 127,1 g eines überwiegend aus Eisensulfat bestehenden Rückstands erhalten, der noch etwa 0,4 Gew.-% an Chlorid enthielt.

## Patentansprüche

1. Verfahren zur Aufarbeitung eisenbelasteter Gebrauchtschwefelsäure bzw. daraus erhaltener, eisenbelasteter schwefelsaurer Materialien, bei dem die Gebrauchtschwefelsäure bzw. das schwefelsaure Material mit einem Material umgesetzt wird, das Eisen- und gegebenenfalls andere Metallchloride enthält, wobei Eisen(II)sulfat erhalten wird, **dadurch gekennzeichnet, dass** die Konzentration der Eisenionen in der Gebrauchtschwefelsäure oder dem aus Gebrauchtschwefelsäure erhaltenen eisenhaltigen Material im Bereich von 2 bis 22 Gew.-%, bevorzugt im Bereich von 8 bis 22 Gew.-%, liegt.

2. Verfahren nach Anspruch 1, **dadurch gekennzeichnet, dass** die bei der Reaktion der Gebrauchtschwefelsäure mit den Metallchloriden entstehende Salzsäure in gasförmiger Form und/oder als wässrige Salzsäure abgetrennt und einer Verwendung zugeführt wird.

3. Verfahren nach Anspruch 1, **dadurch gekennzeichnet, dass** die Gebrauchtschwefelsäure aus der Titandioxid-Herstellung nach dem Sulfatverfahren stammt.

4. Verfahren nach Anspruch 1, **dadurch gekennzeichnet, dass** die Gebrauchtschwefelsäure aus der Kupferverhüttung, Bleiverhüttung oder Zinkverhüttung stammt.

5. Verfahren nach Anspruch 1, **dadurch gekennzeichnet, dass** die Gebrauchtschwefelsäure ein Nebenprodukt einer organischen Synthese ist.

6. Verfahren nach Anspruch 1, **dadurch gekennzeichnet, dass** die Gebrauchtschwefelsäure eine Beizereilösung ist.

7. Verfahren nach einem der vorhergehenden Ansprüche, wobei die Gebrauchtschwefelsäure einen H₂SO₄-Gehalt von 10 bis 90 % aufweist.

8. Verfahren nach Anspruch 7, **dadurch gekennzeichnet, dass** die Schwefelsäure einen H₂SO₄-Gehalt von 20 bis 30 % aufweist.

9. Verfahren nach einem der vorhergehenden Ansprüche, **dadurch gekennzeichnet, dass** das Eisenchlorid-haltige Material als salzsaure Lösung vorliegt.

10. Verfahren nach einem der vorhergehenden Ansprüche, **dadurch gekennzeichnet, dass** das Eisenchlorid-haltige Material 10 bis 30 Gew.-% Eisenionen enthält.

11. Verfahren nach einem der vorhergehenden Ansprüche, **dadurch gekennzeichnet, dass** das Eisenchlorid-haltige Material eine Beizlösung oder ein Aufarbeitungsprodukt hiervon ist.

12. Verfahren nach Anspruch 11, **dadurch gekennzeichnet, dass** das Eisenchlorid-haltige Material erhalten wird durch Aufkonzentrierung der Beizlösung.

13. Verfahren nach einem der Ansprüche 1 bis 10, **dadurch gekennzeichnet, dass** das Eisenchlorid-haltige Material aus der Titandioxid-Herstellung nach dem Chlorid-Verfahren stammt.

14. Verfahren nach Anspruch 13, **dadurch gekennzeichnet, dass** das Eisenchlorid-haltige Material die nach der Chlorierung abgeschiedenen eisenhaltigen Metallchloride enthält.

15. Verfahren nach einem der Ansprüche 1 bis 10, **dadurch gekennzeichnet, dass** das Eisenchlorid-haltige Material aus den bei der Herstellung von synthetischem Rutil aus titan- und eisenhaltigen Rohstoffen anfallenden Clhaltigen Rückständen besteht.

16. Verfahren nach einem der vorhergehenden Ansprüche, **dadurch gekennzeichnet, dass** entweder das Eisenchlorid-haltige Material oder das Eisensulfat-haltige Material vor der Umsetzung mit dem jeweils anderen Material, oder aber das Produkt der Reaktion durch Zugabe von metallischem Eisen und/oder Eisenoxiden in der Acidität reduziert und gleichzeitig die Konzentration an Eisen erhöht wird.

17. Verfahren nach einem der vorhergehenden Ansprüche, **dadurch gekennzeichnet, dass** die von Eisensulfat verschiedenen Metallsulfate, die nach Kristallisation des Eisensulfates in Lösung verbleiben, einer separaten Verwertung oder Entsorgung zugeführt werden.

18. Verfahren nach Anspruch 17, **dadurch gekennzeichnet, dass** die von Eisensulfat verschiedenen Metallsulfate mit Ca-Verbindungen neutralisiert werden.

19. Verfahren nach einem der vorhergehenden Ansprüche, **dadurch gekennzeichnet, dass** die eisensulfathaltige Gebrauchtschwefelsäure bzw. die daraus erhaltenen Produkte mit eisenchloridhaltigen Materialien vom Ort ihrer Entstehung lediglich über eine Rohrleitung zum Ort der Reaktion transportiert werden.

20. Verfahren nach einem der vorhergehenden Ansprüche, **dadurch gekennzeichnet, dass** die Konzentration der Eisenionen in der Gebrauchtschwefelsäure 2 bis 5 Gew.-% liegt.

## Claims

1. Process for regenerating iron-laden spent sulphuric acid or iron-laden sulphuric acid materials obtained therefrom, in which the spent sulphuric acid or the sulphuric acid material is reacted with a material which contains iron chloride and optionally other metal chlorides, wherein iron(II) sulphate is obtained, **characterised in that** the concentration of the iron ions in the spent sulphuric acid or the iron-containing material obtained from spent sulphuric acid lies in the range from 2 to 22 wt.%, preferably in the range from 8 to 22 wt.%.

2. Process according to claim 1, **characterised in that** the hydrochloric acid being produced during the reaction of the spent sulphuric acid with the metal chlorides is separated off in gaseous form and/or as aqueous hydrochloric acid and is supplied to a use.

3. Process according to claim 1, **characterised in that** the spent sulphuric acid originates from titanium dioxide production by the sulphate process.

4. Process according to claim 1, **characterised in that** the spent sulphuric acid originates from copper smelting, lead smelting or zinc smelting.

5. Process according to claim 1, **characterised in that** the spent sulphuric acid is a by-product of an organic synthesis.

6. Process according to claim 1, **characterised in that** the spent sulphuric acid is a pickling solution.

7. Process according to one of the preceding claims, wherein the spent sulphuric acid has an H₂SO₄ content of 10 to 90%.

8. Process according to claim 7, **characterised in that** the sulphuric acid has an H₂SO₄ content of 20 to 30%.

9. Process according to one of the preceding claims, **characterised in that** the iron chloride-containing material is present as a hydrochloric acid solution.

10. Process according to one of the preceding claims, **characterised in that** the iron chloride-containing material contains 10 to 30 wt.% of iron ions.

11. Process according to one of the preceding claims, **characterised in that** the iron chloride-containing material is a pickling solution or a regeneration product thereof.

12. Process according to claim 11, **characterised in that** the iron chloride-containing material is obtained by concentrating the pickling solution.

13. Process according to one of claims 1 to 10, **characterised in that** the iron chloride-containing material originates from titanium dioxide production by the chloride process.

14. Process according to claim 13, **characterised in that** the iron chloride-containing material contains the iron-containing metal chlorides which are separated off after chlorination.

15. Process according to one of claims 1 to 10, **characterised in that** the iron chloride-containing material consists of the Cl-containing residues which occur in the production of synthetic rutile from titanium-containing and iron-containing raw materials.

16. Process according to one of the preceding claims, **characterised in that** either the iron chloride-containing material or the iron sulphate-containing material is reduced in acidity before the reaction with the particular other material, or the product of the reaction is reduced in acidity by addition of metallic iron and/or iron oxides and at the same time the concentration of iron is increased

17. Process according to one of the preceding claims, **characterised in that** the metal sulphates which are different from iron sulphate and which remain in solution after crystallisation of iron sulphate, are supplied to a separate use or disposal.

18. Process according to claim 17, **characterised in that** the metal sulphates which are different from iron sulphate are neutralised using Ca compounds.

19. Process according to one of the preceding claims, **characterised in that** the iron sulphate-containing spent sulphuric acid or the products obtained therefrom with iron-chloride containing materials are transported from the site of their origin simply via a pipe to the site of the reaction.

20. Process according to one of the preceding claims, **characterised in that** the concentration of the iron ions in the spent sulphuric acid is 2 to 5 wt.%.

## Revendications

1. Procédé de traitement d'acide sulfurique usagé contaminé par du fer, ou de matériaux de type acide sulfurique contaminés par du fer obtenus à partir de celui-ci, dans lequel l'acide sulfurique usagé ou le matériau de type acide sulfurique est converti avec un matériau contenant du chlorure de fer et, le cas échéant, d'autres chlorures métalliques, du sulfate de fer (II) étant obtenu, **caractérisé en ce que** la concentration des ions-fer dans l'acide sulfurique usagé, ou dans le matériau contenant du fer obtenu à partir de l'acide sulfurique usagé, est comprise dans la fourchette de 2 à 22 % en poids, de préférence dans la fourchette de 8 à 22 % en poids.

2. Procédé selon la revendication 1, **caractérisé en ce que** l'acide chlorhydrique, apparaissant lors de la réaction de l'acide sulfurique usagé avec les chlorures métalliques, est séparé en acide sulfurique sous forme gazeuse et/ou acide sulfurique aqueux et amené à une utilisation.

3. Procédé selon la revendication 1, **caractérisé en ce que** l'acide sulfurique usagé provient de la fabrication de dioxyde de titane selon le procédé au sulfate.

4. Procédé selon la revendication 1, **caractérisé en ce que** l'acide sulfurique usagé provient du traitement métallurgique du cuivre, du traitement métallurgique du plomb, ou du traitement métallurgique du zinc.

5. Procédé selon la revendication 1, **caractérisé en ce que** l'acide sulfurique usagé est un coproduit d'une synthèse organique.

6. Procédé selon la revendication 1, **caractérisé en ce que** l'acide sulfurique usagé est une solution de décapage.

7. Procédé selon l'une des revendications précédentes, l'acide sulfurique usagé présentant une teneur en H₂SO₄ comprise dans la fourchette de 10 à 90 %.

8. Procédé selon la revendication 7, **caractérisé en ce que** l'acide sulfurique présente une teneur en H₂SO₄ comprise dans la fourchette de 20 à 30 %.

9. Procédé selon l'une des revendications précédentes, **caractérisé en ce que** le matériau contenant du chlorure de fer se présente sous la forme de solution d'acide chlorhydrique.

10. Procédé selon l'une des revendications précédentes, **caractérisé en ce que** le matériau contenant du chlorure de fer contient de 10 à 30 % en poids d'ions-fer.

11. Procédé selon l'une des revendications précédentes, **caractérisé en ce que** le matériau contenant du chlorure de fer est une solution de décapage, ou bien un produit de préparation en provenant.

12. Procédé selon la revendication 11, **caractérise en ce que** le matériau contenant du chlorure de fer est obtenu par concentration de la solution de décapage.

13. Procédé selon l'une des revendications 1 à 10, **caractérisé en ce que** le matériau contenant du chlorure de fer provient de la fabrication de dioxyde de titane selon le procédé au chlorure.

14. Procédé selon la revendication 13, **caractérisé en ce que** le matériau contenant du chlorure de fer contient les chlorures métalliques contenant du fer, ayant été séparés après chloruration.

15. Procédé selon l'une des revendications 1 à 10, **caractérisé en ce que** le matériau contenant du chlorure de fer est composé des résidus contenant du Cl, apparaissant lors de la fabrication de rutile synthétique, à partir de matières premières contenant du titane et du fer.

16. Procédé selon l'une des revendications précédentes, **caractérisé en ce que**, soit le matériau contenant du chlorure de fer, soit le matériau contenant du sulfate de fer, avant la conversion avec cheque fois l'autre matériau, ou cependant le produit de la réaction, est soumis à une réduction d'acidité par addition de fer métallique et/ou d'oxyde de fer et, simultanément, la concentration en fer est augmentée.

17. Procédé selon l'une des revendications précédentes, **caractérisé en ce que** les sulfates métalliques, différant du sulfate de fer, qui subsistent en solution après cristallisation du sulfate de fer, sont amenés à une utilisation séparée ou à une élimination.

18. Procédé selon la revendication 17, **caractérisé en ce que** les sulfates métalliques différant du sulfate de fer sont neutralisés avec des composés de Ca.

19. Procédé selon l'une des revendications précédentes, **caractérisé en ce que** l'acide sulfurique usagé contenant du sulfate de fer, ou les produits obtenus à partir de celui-ci, avec des matériaux contenant du chlorure de fer, sont transportés du site de leur création au site de la réaction, uniquement par une tuyauterie.

20. Procédé selon l'une des revendications précédentes, **caractérisé en ce que** la concentration des ions-fer dans l'acide sulfurique usagé est comprise dans la fourchette de 2 à 5 % en poids.
